# EUROPEAN PATENT APPLICATION

(11) **EP 4 574 594 A1**
(43) Date of publication of application: **25.06.2025**
(21) Application number: 24213160.5
(22) Date of filing: 15.11.2024
(51) Int. Cl.: B60T 8/172, B60T 8/1755, B60T 8/1761, B60T 7/12

(54) **VEHICLE BRAKING APPARATUS AND VEHICLE BRAKING METHOD**

(30) Priority: 21.12.2023 JP 2023215936
(71) Applicant: Suzuki Motor Corporation, Shizuoka 432-8611 (JP)
(72) Inventor: OCHI, Takahiro, HAMAMATSU-SHI, 432-8611 (JP)
(74) Representative: Plasseraud IP

(57) **Abstract**

A vehicle braking apparatus performs brake fluid pressure control and determines whether a movement direction of the vehicle matches a steering direction or not (S204) when the vehicle starts moving on a slope road in a wheel lock state. When the movement direction of the vehicle does not match the steering direction, the apparatus reduces the brake fluid pressure below a basic value in accordance with brake operation by the driver (S206), and when the movement direction of the vehicle matches the steering direction, the apparatus stops reduction in the brake fluid pressure(S205). The apparatus continues the brake fluid pressure control until the vehicle decelerates during moving on the slope road (S207).

## Description

### BACKGROUND OF THE INVENTION

### Field of the Invention

The present invention relates to a vehicle braking apparatus and a vehicle braking method.

### Description of the Related Art

In a known braking technique, an anti-lock brake system (ABS) is activated to prevent all the four wheels from locking up.

[Patent Document 1] JP 2011-131618 A

On a slope road, when a friction coefficient of the road surface is low, it may cause a situation where a stopped vehicle slides down the road surface due to slippage of its wheels. In such a situation, it is difficult to stop the slip and stop the vehicle by means of increasing and decreasing brake fluid pressure repeatedly like the ABS system. In a situation where the vehicle is sliding down a slope road, it is also difficult for the driver to steer the vehicle in the direction intended by the driver (i.e., the steering direction), and thus there is a concern that the vehicle may continue to slide down the slope road (i.e., slide in the direction different from the driver's intention) despite the driver's operation of turning the steering wheel to the right or left.

### SUMMARY OF THE INVENTION

In view of the above-described circumstances, an object of the present invention is to provide a vehicle braking apparatus and a vehicle braking method, which can contribute to further improvement in safety by suppressing a situation where the vehicle continues to slide in a direction different from the driver's intention in the case of sliding down.

To solve the above-mentioned problem, a vehicle braking apparatus according to one aspect of the present invention includes a slope detection unit configured to detect that a vehicle is on a slope road, a wheel-lock detection unit configured to detect that the vehicle is in a wheel lock state, a vehicle-state determination unit configured to determine whether a movement direction of the vehicle on the slope road matches a steering direction or not, and a brake-fluid-pressure setting unit configured to set brake fluid pressure of the vehicle in accordance with brake operation by a driver. In this aspect, in a period during which the vehicle is moving on the slope road after starting to move on the slope road in the wheel lock state, the brake-fluid-pressure setting unit performs brake fluid pressure control that reduces the brake fluid pressure below a basic value in accordance with brake operation by the driver when the movement direction of the vehicle does not match the steering direction, and stops reduction in the brake fluid pressure when the movement direction of the vehicle matches the steering direction.

The vehicle may include a front wheel and a rear wheel. Of the front wheel and the rear wheel, at least the front wheel may be configured as a steered wheel that can be turned in response to steering operation by the driver. In this case, of the front wheel and the rear wheel, the brake-fluid-pressure setting unit may perform the brake fluid pressure control only on the front wheel.

The vehicle braking apparatus may further include a deceleration determination unit configured to determine whether the vehicle is decelerating or not. In this case, the brake-fluid-pressure setting unit may stop the brake fluid pressure control, when the deceleration determination unit determines after execution of the brake fluid pressure control that the vehicle is decelerating.

The brake-fluid-pressure setting unit may perform the brake fluid pressure control when the vehicle starts moving from a stopped state with the vehicle being in the wheel lock state.

The wheel-lock detection unit may detect that the vehicle is in the wheel lock state when every wheel of the vehicle is locked.

In another aspect of the present invention, a vehicle braking apparatus includes a slope detection unit configured to detect that a vehicle is on a slope road, a wheel-lock detection unit configured to detect that the vehicle is in a wheel lock state, a vehicle-state determination unit configured to determine whether a movement direction of the vehicle on the slope road matches a steering direction or not, and a brake-fluid-pressure setting unit configured to set brake fluid pressure of the vehicle. In this aspect, in a period during which the vehicle is moving on the slope road after starting to move on the slope road in the wheel lock state, when the movement direction of the vehicle does not match the steering direction, the brake-fluid-pressure setting unit sets the brake fluid pressure lower than a brake fluid pressure that is set in a case where the movement direction of the vehicle matches the steering direction.

In a further aspect of the present invention, a vehicle braking method includes steps of detecting that a vehicle is on a slope road, and detecting that the vehicle starts moving in a brake-on state after stopping on the slope road. The brake-on state may be defined as a state in which a brake is applied. In this aspect, after starting to move in the brake-on state, the vehicle braking method further includes steps of determining whether the vehicle is in a wheel lock state or not, determining, when the vehicle is in the wheel lock state, whether the movement direction of the vehicle matches the steering direction or not, and reducing, when the movement direction does not match the steering direction, brake fluid pressure to be lower than in a case where the movement direction matches the steering direction.

### EFFECT OF THE INVENTION

According to one aspect of the present invention, when a vehicle starts moving with the wheels locked on a slope road and then the vehicular movement direction does not match the steering direction, i.e., when the vehicle slides down the slope road in a direction different from the driver's intention, brake fluid pressure of the vehicle is reduced by brake fluid pressure control. This control helps to resolve the locked state of the wheels, restores effectiveness of steering by the driver, and enables the vehicle to head in the direction intended by the driver. Hence, this control can prevent the vehicle from continuing to slide down the slope road in a direction different from the driver's intention and contribute to further improvement in safety.

### BRIEF DESCRIPTION OF THE DRAWINGS

In the accompanying drawings:
Fig. 1 is a schematic diagram illustrating an overall configuration of a vehicle braking apparatus according to one embodiment of the present invention;
Fig. 2 is a schematic diagram illustrating a configuration of a control system of the braking apparatus;
Fig. 3 is a schematic diagram illustrating an internal configuration of a controller of the control system;
Fig. 4 is a flowchart illustrating a flow of control (i.e., braking control) to be performed by the controller;
Fig. 5 is a flowchart illustrating brake fluid pressure adjustment processing in the braking control;
Fig. 6 is a schematic diagram illustrating vehicle behavior under the braking control; and
Fig. 7 is a state transition diagram illustrating an operating state of the braking apparatus to be switched by the braking control and switching conditions (i.e., transition conditions).

### DETAILED DESCRIPTION

Hereinbelow, embodiments of the present invention will be described by referring to the accompanying drawings.

### (Configuration of Braking Apparatus)

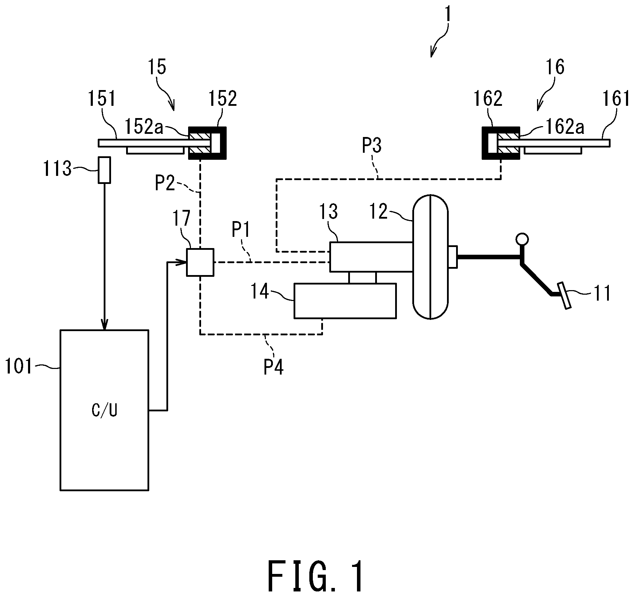

Fig. 1 is a schematic diagram illustrating a configuration of a vehicle braking apparatus 1 (hereinafter abbreviated as the braking apparatus 1) according to one embodiment of the present invention.

The braking apparatus 1 includes a brake pedal 11, a brake booster 12, a brake master cylinder 13, a brake oil reservoir 14, right and left front brakes 15, and right and left rear brakes 16 as the main components of the present embodiment.

The brake pedal 11 is an operating member to be depressed by the driver at the time of applying the brake. In the present embodiment, the brake pedal 11 constitutes an operating member of a foot brake, and the driver can adjust the braking force of the foot brake by adjusting the force or amount of depressing the brake pedal 11.

The brake booster 12 is a booster that assists in reducing the force required for the driver to depress the brake pedal 11, i.e., the force required for the driver in braking operation. In a vehicle provided with an internal combustion engine as a driving source, a boosting effect is generated by introducing intake negative pressure of the engine.

The brake master cylinder 13 is a pressure conversion device that converts the force to depress the brake pedal 11 by the driver, specifically, the force required for the braking operation after boosting by the brake booster 12, into pressure of brake oil (hereinafter referred to as "brake fluid pressure"). The converted brake fluid pressure is transmitted to the front brakes 15 and the rear brakes 16 through oil pipes P1, P2, and P3, which are filled with the brake oil.

The brake oil reservoir 14 is a container configured to: store excessive brake oil in the brake master cylinder 13 when the brake oil amount in the brake master cylinder 13 is excessive; and replenish the brake master cylinder 13 with the stored brake oil when the brake oil amount in the brake master cylinder 13 becomes insufficient.

The two front brakes 15 are brakes provided on the respective two front wheels of the vehicle and are disc brakes in the present embodiment. Each front brake 15 includes a brake disc 151 and a brake caliper 152. Each brake disc 151 is attached to the front wheel, and each brake disc 151 can rotate together with the front wheel. Each brake caliper 152 is disposed to pinch the outer periphery of the brake disc 151 from the front and back. When each brake caliper 152 receives supply of the brake oil from the brake master cylinder 13 through the oil pipes P1 and P2, two brake pads 152a are activated and each brake disc 151 is clamped by the two brake pads 152a. This action generates friction between each brake disc 151 and the brake pads 152a, generating braking force on the vehicle.

The two rear brakes 16 are brakes provided on the respective two rear wheels of the vehicle and are disc brakes similarly to the front brakes 15. Each rear brake 16 includes a brake disc 161 and a brake caliper 162. Each brake disc 161 is attached to the rear wheel, and each brake disc 161 can rotate together with the rear wheel. Each brake caliper 162 is disposed to pinch the outer periphery of the brake disc 161 from the front and back. When each brake caliper 162 receives supply of the brake oil from the brake master cylinder 13 through the oil pipe P3, two brake pads 162a are activated and each brake disc 161 is clamped by the two brake pads 162a. This action generates friction between each brake disc 161 and the brake pads 162a, generating braking force on the vehicle.

In the present embodiment, a pressure regulating valve 17, a controller 101, and various sensors such as wheel speed sensors 113 are provided in addition to the above-described components.

The pressure regulating valve 17 regulates the pressure of the brake oil to be supplied to the brake caliper 152 of each front brake 15 (hereinafter abbreviated as "the front brake caliper 152"), i.e., regulates the brake fluid pressure to be applied to the brake pads 152a of each front brake caliper 152. In the present embodiment, in the case of trying to resolve a locked state of the front wheels, the brake fluid pressure is reduced by extracting part of the brake fluid to be supplied to each front brake caliper 152 from the oil pipe P2, which connects the pressure regulating valve 17 to each front brake caliper 152. This part of the extracted brake oil is returned to the brake oil reservoir 14 via an oil pipe P4, which bypasses the oil pipe P1 extending from the brake master cylinder 13, without going through the oil pipe P1. The pressure regulating valve 17 is an actuator that operates in response to a command signal from the controller 101, and constitutes an output unit of the braking apparatus 1.

The controller 101 constitutes a calculation unit of the braking apparatus 1. The controller 101 is configured as an electronic control unit and is composed of a microcomputer that includes a central processing unit (CPU), an input/output interface, and a storage unit such as a ROM and a RAM. The controller 101 receives output signals from various sensors such as the wheel speed sensors 113 and executes predetermined braking-related calculations that are stored in advance. The controller 101 generates command signals in accordance with the results of the calculations and outputs the command signals to various actuators including the pressure regulating valve 17.

### (Configuration of Control System)

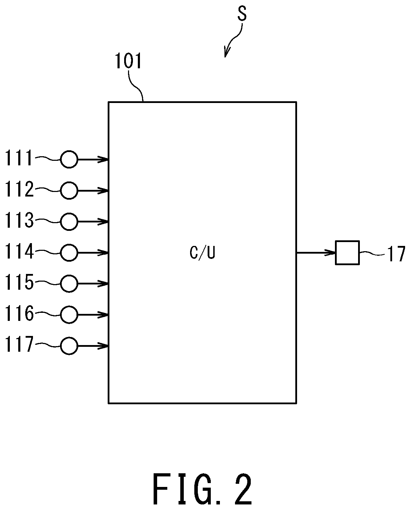

Fig. 2 is a schematic diagram illustrating a configuration of a control system S installed in the braking apparatus 1.

Signals to be received as inputs by the controller 101 include output signals from various sensors such as an accelerator position sensor 111, a brake-pedal-force sensor 112, the wheel speed sensors 113, an inclination angle sensor 114, an acceleration sensor 115, a steering angle sensor 116, and a vehicle speed sensor 117.

The accelerator position sensor 111 detects amount of operation on an accelerator pedal by the driver (hereinafter referred to as "the accelerator operation amount"). The accelerator operation amount indicates the output torque required for the driving source such as an engine (i.e., indicates the target engine torque).

The brake-pedal-force sensor 112 detects amount of operation on the brake pedal by the driver (hereinafter referred to as "the brake operation amount"). The brake operation amount is used by the controller 101 for setting the brake fluid pressure to be applied to the brake pads 152a of each front brake caliper 152.

Each wheel speed sensor 113 detects the rotational speed of the wheel (hereinafter referred to as "the wheel speed") installed on the vehicle for running. In the present embodiment, four wheel speed sensors 113 (113a to 113d) are provided on the respective four wheels of the vehicle, specifically, the right front wheel, the left front wheel, the right rear wheel, and the left rear wheel. These four wheel speed sensors 113a to 113d detect the wheel speeds of the respective four wheels. In the present embodiment, the vehicle is a FF (front-engine front-drive) vehicle, and both the left and right front wheels are steering wheels and drive wheels.

The inclination angle sensor 114 detects an inclination angle of the vehicle. The inclination angle of the vehicle indicates the slope angle of the road surface when the vehicle is on a slope road. The inclination direction of the road surface can be detected on the basis of the inclination angle detected by the inclination angle sensor 114.

The acceleration sensor 115 detects accelerations of the vehicle in the respective three directions including: the direction along the front-and-rear axis (i.e., roll axis) passing through the center of gravity of the vehicle; the direction along the lateral axis (i.e., pitch axis); and the direction along the vertical axis (i.e., yaw axis). The acceleration sensor 115 further detects the rotational angular velocity around each of these axes. In other words, the acceleration sensor 115 detects the rate of change of the roll angle (i.e., rolling angular velocity), the rate of change of the pitch angle (i.e., pitching angular velocity), and the rate of change of the yaw angle (i.e., yawing angular velocity) of the vehicle. On the basis of the accelerations detected by the acceleration sensor 115, both the vehicular movement direction and the orientation of the vehicle can be detected.

The steering angle sensor 116 detects the amount of operation on the steering wheel by the driver, i.e., detects the steering angle of the vehicle. On the basis of the steering angle detected by the steering angle sensor 116, the orientation of the steered wheels, i.e., the steering direction of the vehicle can be detected. Specifically, the rightward direction is defined as the steering direction in which the vehicle faces in the case of manually turning the steering wheel clockwise, and the leftward direction is defined as the steering direction in which the vehicle faces in the case of manually turning the steering wheel counterclockwise. In the present embodiment, the front wheels are configured as the steered wheels.

The vehicle speed sensor 117 detects the traveling speed of the vehicle (hereinafter referred to as "the vehicle speed"). The vehicle speed can be calculated by converting the rotational speed of the wheels detected by the wheel speed sensors 113 into the distance to be traveled per unit time with the use of vehicular parameters such as a dynamic radius of the tire. The vehicle speed can also be calculated by converting the rotational speed of the output shaft of the vehicular driving source with the use of vehicular parameters such as the dynamic radius of the tire and a gear ratio in the power transmission path.

### (Internal Configuration of Controller)

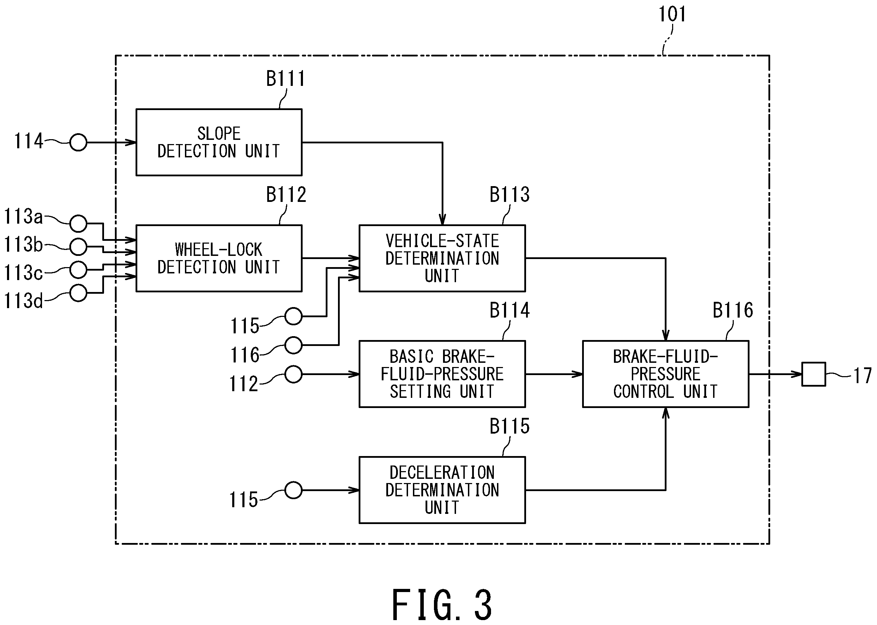

Fig. 3 is a schematic diagram illustrating internal configuration of the controller 101.

The controller 101 includes a slope detection unit Bill, a wheel-lock detection unit B112, a vehicle-state determination unit B113, a reference brake-fluid-pressure setting unit B114, a deceleration determination unit B115, and a brake-fluid-pressure control unit B116 as its internal functions or components. These various internal functions or components are achieved in software by causing the central processing unit (CPU) of the controller 101 to operate on the basis of control programs pre-stored in a storage unit such as a ROM.

On the basis of the output signal from the inclination angle sensor 114, the slope detection unit Bill detects that the vehicle is on a slope road. A slope road may be an uphill road, i.e. a road that slopes upward with respect to the forward direction of the vehicle. A slope road may be a downhill road, i.e. a road that slopes downward with respect to the forward direction of the vehicle.

On the basis of the output signals from the respective wheel speed sensors 113 (113a to 113d), the wheel-lock detection unit B112 detects that the vehicle is in a wheel-lock state. In the present embodiment, the wheel lock state means a state in which all the wheels of the vehicle are locked. If the vehicle is stuck in the wheel lock state, this fact can be detected by lack of substantial difference in wheel speed between different wheels under the state where the brake pedal is depressed, and the wheel lock state can also be detected by the wheel speed of each wheel indicative of substantially 0 rpm.

When the vehicle starts to move on a slope road in the wheel lock state, i.e., when the vehicle starts to slide down due to gravity, the vehicle-state determination unit B113 detects the occurrence of sliding down and determines whether the vehicular movement direction coincides with or matches the steering direction after starting to move in the wheel lock state or not. This series of detection and determination can be achieved on the basis of the respective detection results of the slope detection unit Bill and the wheel-lock detection unit B112 and the respective output signals from the acceleration sensor 115 and the steering angle sensor 116. The vehicular movement direction can be detected on the basis of the output signals from the acceleration sensor 115, and the steering direction of the vehicle can be detected on the basis of the output signal from the steering angle sensor 116. In the present embodiment, under a situation where the vehicle is sliding down a slope road, if the vehicular movement direction deviates from the inclination direction of the road surface toward the steering direction (i.e., the orientation of the wheels), the vehicular movement direction is determined to match the steering direction.

The reference brake-fluid-pressure setting unit B114 calculates a basic value of the brake fluid pressure (hereinafter referred to as "the basic brake fluid pressure") BRKb on the basis of the output signal from the brake-pedal-force sensor 112. As the braking operation amount becomes larger, the basic brake fluid pressure BRKb is calculated as a larger value.

On the basis of the output signals from the acceleration sensor 115, the deceleration determination unit B115 determines whether the vehicle is decelerating or not, i.e., whether the vehicle has deceleration in the movement direction or not.

The brake-fluid-pressure control unit B116 adjusts the brake fluid pressure BRKf of the front brakes 15 on the basis of the respective results of the vehicle-state determination unit B113 and the deceleration determination unit B115.

Specifically, in a situation where the vehicle is sliding down a slope road, brake fluid pressure control is implemented in such a manner that: the brake fluid pressure BRFf is reduced below the basic brake fluid pressure BRKb when the vehicular movement direction does not match the steering direction; and the reduction in brake fluid pressure BRKf is stopped when the vehicular movement direction matches the steering direction.

In the present embodiment, in the case of reducing the pressure, the brake fluid pressure BRKf is reduced by a predetermined pressure ΔBRK from the basic brake fluid pressure BRKb (BRKf=BRKb-ΔBRK). The brake-fluid-pressure control unit B116 continues the brake fluid pressure control until the vehicle begins to decelerate. The brake-fluid-pressure control unit B116 outputs, to the pressure regulating valve 17, a command signal according to the brake fluid pressure BRKf after adjustment by the brake fluid pressure control or the reduced pressure value ΔBRK of the brake fluid pressure BRKf.

### (Contents of Braking Control)

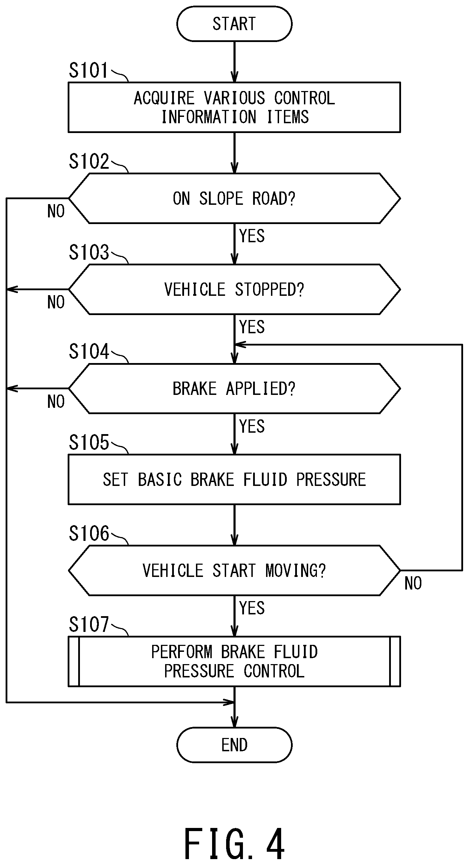

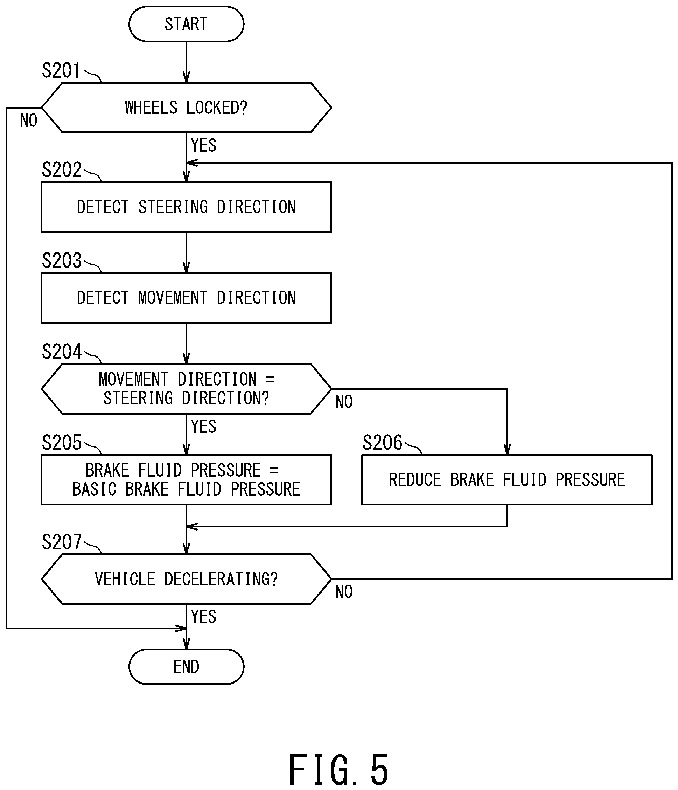

Fig. 4 is a flowchart illustrating an overall flow of control (i.e., braking control) to be performed by the controller 101, and Fig. 5 is a flowchart illustrating details of brake fluid pressure adjustment processing (i.e., the step S107) in the braking control. The controller 101 performs the control shown in Fig. 4 and Fig. 5 at predetermined time intervals after the power to the control system is turned on.

In the flowchart of Fig. 4, in the step S101, output information items from various sensors, such as the brake operation amount and the wheel speed, are acquired.

In the step S102, it is determined whether the vehicle is on a slope road or not. If the vehicle is on a slope road, the processing proceeds to the step S103. If the vehicle is not on a slope road, the control in this routine is completed.

In the step S103, it is determined whether the vehicle is stopped or not. If the vehicle is stopped, the processing proceeds to the step S104. If the vehicle is not stopped, the control in this routine is completed.

In the step S104, it is determined whether the brake pedal is depressed by the driver or not. If the brake pedal is depressed, i.e., if the brake is applied, the processing proceeds to the step S105. If the brake pedal is not depressed, i.e., if the brake is turned off, the control in this routine is completed.

In the step S105, the basic brake fluid pressure BRKb is calculated, and the respective brake fluid pressures BRKf and BRKr of the front brakes 15 and the rear brakes 16 are set to the basic brake fluid pressure BRKb. Under this setting, brake oil of the basic brake fluid pressure BRKb is supplied to the brake calipers 152 and 162 of both the front brakes 15 and the rear brakes 16, and braking force is applied to the vehicle by the foot brake through both the front wheels and the rear wheels.

In the step S106, it is determined whether the vehicle starts to move or not, i.e., whether the vehicle is slipping down or not. If the vehicle starts to move, the processing proceed to the step S107. If the vehicle continues to be stopped, the processing returns to the step S104 and the processing from the step S104 to the step S106 is repeated.

In the step S107, the brake fluid pressure control is performed. The brake fluid pressure control is performed on the basis of the procedure shown in the flowchart of Fig. 5.

In the flowchart shown in Fig. 5, in the step S201, it is determined whether the vehicle is in the wheel lock state or not. If the vehicle is in the wheel lock state, the processing proceeds to the step S202. If the vehicle is not in the wheel lock state, the brake fluid pressure control is completed and the control in this routine is completed. If the vehicle is not in the wheel lock state, the respective brake fluid pressures BRKf and BRKr of both the front brakes 15 and the rear brakes 16 are maintained at the basic brake fluid pressure BRKb.

In the step S202, the steering direction of the vehicle is detected.

In the step S203, the movement direction caused by sliding-down of the vehicle is detected. In other words, the direction in which the vehicle is sliding down is detected.

In the step S204, it is determined whether the vehicular movement direction matches the steering direction or not. If the vehicular movement direction matches the steering direction, the processing proceeds to the step S205. If both do not match, the processing proceeds to the step S206. In the present embodiment, if the vehicular acceleration is in the inclination direction of the road surface, the vehicular movement direction is determined to be inconsistent with the steering direction. If the vehicular acceleration is in a direction that deviates from the inclination direction of the road surface toward the steering direction, the vehicular movement direction is determined to match the steering direction. In addition to or instead of such determination, the angle that the vehicular movement direction makes with respect to the inclination direction of the road surface may be detected so that the vehicular movement direction is determined to match the steering direction when this angle matches a determination value corresponding to the steering angle of the vehicle or falls within a predetermined range based on this determination value.

In the step S205, the brake fluid pressure BRKf of the front brakes 15 is set to the basic brake fluid pressure BRKb. In other words, in addition to the brake fluid pressure BRKr of the rear brakes 16, the brake fluid pressure BRKf of the front brakes 15 is maintained at the basic brake fluid pressure BRKb.

In the step S206, the brake fluid pressure BRKf of the front brakes 15 is set to a pressure that is lower than the basic brake fluid pressure BRKb by a predetermined pressure ΔBRK. In the present embodiment, of the front wheels and the rear wheels, only the front wheels configured as the steered wheels are subjected to reduction in pressure of the brake oil to be supplied to the brake calipers 152, i.e., only the brake fluid pressure BRKf of the front brakes 15 is reduced, whereas the pressure of the brake oil to be supplied to the brake calipers 162 of the rear wheels, i.e., the brake fluid pressure BRKr of the rear brakes 16 is maintained at the basic brake fluid pressure BRKb. The reduction in brake fluid pressure to be supplied to the front brake calipers 152 helps to resolve the wheel lock state.

In the step S207, it is determined whether the vehicle is decelerating or not. If the vehicle is decelerating, the brake fluid pressure control is completed and the control in this routine is completed. If the vehicle is not decelerating, the processing returns to the step S202 and the brake fluid pressure control is continued. In other words, in the present embodiment, the controller 101 continues the brake fluid pressure control in the period from the time at which the vehicle starts moving on the slope road in the wheel lock state to the time at which the vehicle starts to decelerate, and the controller 101 repeats the control of: reducing the brake fluid pressure BRKf depending on coincidence/non-coincidence between the vehicular movement direction and the steering direction (in the step S206); and stopping the reduction of the brake fluid pressure BRKf (in the step S205).

In the present embodiment, after completion of the brake fluid pressure control, until the brake pedal is released and the brake-on state is released, the respective brake fluid pressures BRKf and BRKr of the front brakes 15 and the rear brakes 16 are set to the basic brake fluid pressure BRKb.

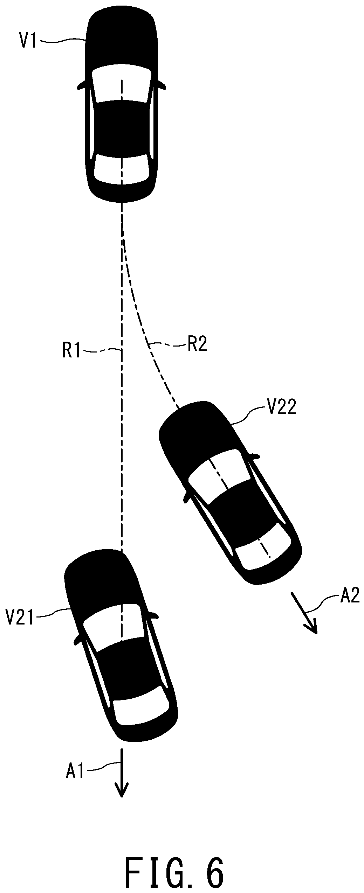

Fig. 6 is a schematic diagram illustrating vehicle behavior under the braking control.

In Fig. 6, vehicles V21 and V22 show the vehicular behavior after the stopped vehicle V1 starts moving in the wheel lock state. It is assumed that the vehicle V21 moves along a route R1 in the inclination direction of the road surface after starting to move and the vehicle V22 moves along a route R2 in a direction deviating from the inclination direction of the road surface after starting to move. The vehicle V21 moving along the route R1 has an acceleration in the inclination direction of the road surface and is in the state where its movement direction does not match the steering direction. The vehicle V22 moving along the route R2 has an acceleration A2 in a direction deviating from the inclination direction of the road surface toward the steering direction and is in the state where its movement direction matches the steering direction.

In the present embodiment, in a situation where the vehicle is sliding down a slope road, the vehicle V21 is subjected to pressure reduction by the brake fluid pressure control whereas pressure reduction by the brake fluid pressure control is stopped for the vehicle V22. In other words, if the vehicle is still moving in the inclination direction of the road surface despite the fact that the vehicle turns around the yaw axis and the orientation of the vehicle has changed in response to steering like the vehicle V21, pressure reduction by the brake fluid pressure control is performed. Conversely, if the vehicular movement direction deviates from the inclination direction of the road surface and the movement direction matches the steering direction in addition to actual change in orientation of the vehicle like the vehicle V22, pressure reduction by the brake fluid pressure control is stopped.

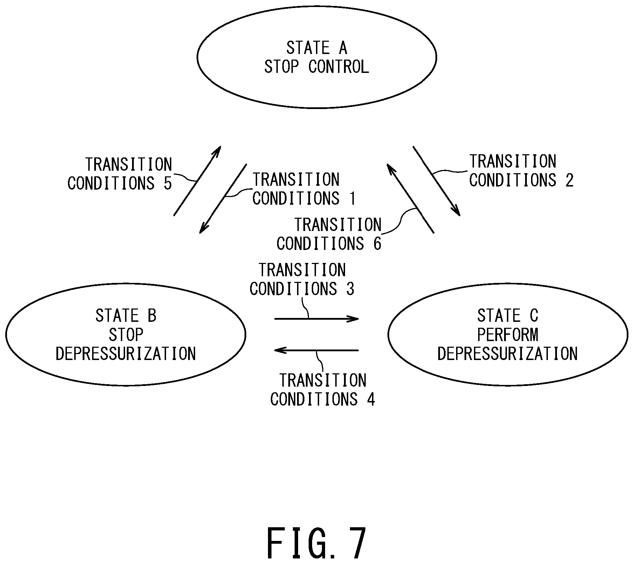

Fig. 7 is a state transition diagram illustrating an operating state of the braking apparatus 1 to be switched by the braking control and the switching conditions (i.e., transition conditions). The operation of the braking apparatus 1 will be described by referring to Fig. 7.

The operating state of the braking apparatus 1 can be broadly classified into the following three states:
the state A in which the vehicle is stopped;
the state B in which the vehicle is sliding down and the vehicular movement direction matches the steering direction; and
the state C in which the vehicle is sliding down and the vehicular movement direction does not match the steering direction.

In the state A, the brake fluid pressure control is stopped.

In the state B, the brake fluid pressure reduction for the steered wheels (i.e., front wheels) is stopped.

In the state C, the brake fluid pressure for the steered wheels (i.e., front wheels) is reduced.

The transition from the state A to the state B occurs when the following transition conditions 1 are satisfied.

### (Transition Conditions 1)

· The brake fluid pressure control is stopped.
· The wheel lock state is detected.
· The start of sliding down, i.e. acceleration in the inclination direction of the road surface is detected.
· The vehicular movement direction matches the steering direction.

The transition from the state A to the state C occurs when the following transition conditions 2 are satisfied.

### (Transition Conditions 2)

· The brake fluid pressure control is stopped.
· The wheel lock state is detected.
· The start of sliding down, i.e. acceleration in the inclination direction of the road surface is detected.
· The vehicular movement direction does not match the steering direction.

The transition from the state B to the state C occurs when the following transition conditions 3 are satisfied.

### (Transition Conditions 3)

· The brake fluid pressure control is being performed.
· The wheel lock state is detected.
· After start of sliding down, deceleration is not detected.
· The vehicular movement direction does not match the steering direction.

The transition from the state C to the state B occurs when the following transition conditions 4 are satisfied.

### (Transition Conditions 4)

· The brake fluid pressure control is being performed.
· The brake fluid pressure of the steered wheels is being reduced.
· After start of sliding down, deceleration is not detected.
· The vehicular movement direction matches the steering direction.

The transition from the state B to the state A occurs when the following transition conditions 5 are satisfied.

### (Transition Conditions 5)

· The brake fluid pressure control is being performed.
· The wheel lock state is detected.
· After start of sliding down, deceleration is detected.
· The vehicular movement direction matches the steering direction.

The transition from the state C to the state A occurs when the following transition conditions 6 are satisfied.

### (Transition conditions 6)

· The brake fluid pressure control is being performed.
· The brake fluid pressure of the steered wheels is reduced.
· After start of sliding down, deceleration is detected.
· The vehicular movement direction does not match the steering direction.

### (Advantages and Effects)

The vehicle braking apparatus 1 according to the present embodiment has the above-described configuration. The effects to be obtained by the present embodiment will be described below.

Firstly, when the vehicular movement direction does not match the steering direction after the vehicle starts moving on a slope road in the wheel lock state (i.e., after the vehicle starts to slide down), in other words, when the vehicle slides down in a direction different from the driver's intention, the brake fluid pressure control is performed to reduce the brake fluid pressure and help to resolve the wheel lock state. This control restores effectiveness of steering by the driver, and enables the vehicle to head in the direction intended by the driver.

In this manner, when the vehicle slides down a slope road due to wheel slippage, the above-described control can avoid a situation where the vehicle continues to slide in a direction different from the driver's intention, and can further improve safety.

On the other hand, when the vehicular movement direction matches the steering direction, i.e., when the vehicle is sliding down a slope road but has not yet lost steering ability, the reduction in pressure by the brake fluid pressure control is stopped, which can avoid a situation where unnecessary reduction in brake fluid pressure causes a delay in decelerating or stopping the vehicle so as to lead to a loss of safety.

Secondly, of the front wheels and the rear wheels, when at least the front wheels are configured as the steered wheels, the brake fluid pressure control is performed only on the front wheels without including the rear wheels, and this control helps to eliminate the lock state in the wheels directly linked to steering so as to recover steering ability and can avoid a situation where the brake fluid pressure on both the front wheels and the rear wheels is reduced to cause problems with vehicular braking.

Furthermore, through limiting the brake fluid pressure control only to the front wheels, it is possible to detect the state where the wheel lock state has been resolved accurately, thereby enabling appropriate implementation of the brake fluid pressure control.

Specifically, in the case of detecting occurrence of the wheel lock state on the basis of the difference in wheel rotation, the rotation difference between the front wheels and the rear wheels can be generated by maintaining the brake fluid pressure of the rear wheels, and it is possible to detect the resolution of the wheel lock state by detecting the rotation difference. Contrastively, if the brake fluid pressure control is performed on both the front wheels and the rear wheels, the rotation difference is not detected when the wheel lock state is resolved on all the wheels subjected to the brake fluid pressure control, thus, resolution of the wheel lock state is not detected, and consequently, the brake fluid pressure control continues unnecessarily.

Additionally, when the vehicle has left and right rear wheels, through maintaining brake fluid pressure on both the left and right rear wheels, it is possible to prevent the braking force from being unbalanced between the left and right rear wheels.

Thirdly, when the vehicle decelerates after the brake fluid pressure control is activated, the brake fluid pressure control is stopped to increase the brake fluid pressure. This control enables braking force to be applied on both the front wheels and the rear wheels, and thereby enables the vehicle to decelerate and stop quickly.

Fourthly, when the vehicle starts moving in the wheel lock state from the stopped state, the brake fluid pressure control is performed. This configuration can suppress a situation where the vehicle continues to slide in a direction different from the driver's intention due to sliding down from the stopped state, specifically, a situation where the vehicle continues to slide downward on the slope road even though the driver is turning the steering wheel to the right or left.

Fifthly, defining a state in which all the wheels of the vehicle are locked as a wheel lock state, when it is detected that the vehicle is in the wheel lock state and the vehicle starts moving on a slope road in such a wheel lock state, the brake fluid pressure control is performed. As a result, when the vehicle is moving in a situation where only one or some of the wheels are locked, for example, when only the front wheels of the front and rear wheels are locked, it is possible to avoid a situation where braking is hindered due to unnecessary pressure reduction caused by the brake fluid pressure control, and to decelerate and stop the vehicle quickly.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 1: vehicle braking apparatus
- 11: brake pedal
- 12: brake booster
- 13: brake master cylinder
- 14: brake oil reservoir
- 15: front brake
- 151: brake disc
- 152: brake caliper
- 152a: brake pad
- 16: rear brake
- 161: brake disc
- 162: brake caliper
- 162a: brake pad
- 17: pressure regulating valve
- 101: controller
- 111: accelerator position sensor
- 112: brake-pedal-force sensor
- 113: wheel speed sensor
- 114: inclination angle sensor
- 115: acceleration sensor
- 116: steering angle sensor
- 117: vehicle speed sensor
- S: control sensor

## Claims

1. A vehicle braking apparatus (101) comprising:
a slope detection unit (Bill) configured to detect that a vehicle (V1) is on a slope road;
a wheel-lock detection unit (B112) configured to detect that the vehicle (V1) is in a wheel lock state;
a vehicle-state determination unit (B113) configured to determine whether a movement direction of the vehicle (V1) on the slope road matches a steering direction or not; and
a brake-fluid-pressure setting unit (B114, B116) configured to set brake fluid pressure of the vehicle (V1) in accordance with brake operation by a driver,
wherein, in a period during which the vehicle (V1) is moving on the slope road after starting to move on the slope road in the wheel lock state, the brake-fluid-pressure setting unit (B114, B116) performs brake fluid pressure control that reduces the brake fluid pressure below a basic value in accordance with brake operation by the driver when the movement direction of the vehicle (V1, V21) does not match the steering direction, and stops reduction in the brake fluid pressure when the movement direction of the vehicle (V1, V22) matches the steering direction.

2. The vehicle braking apparatus (101) according to claim 1, wherein:
the vehicle (V1) includes a front wheel and a rear wheel, at least the front wheel being configured as a steered wheel capable of being turned in response to steering operation by the driver; and
of the front wheel and the rear wheel, the brake-fluid-pressure setting unit (B114, B116) performs the brake fluid pressure control only on the front wheel.

3. The vehicle braking apparatus (101) according to claim 1 or claim 2, further comprising a deceleration determination unit (B115) configured to determine whether the vehicle is decelerating or not,
wherein the brake-fluid-pressure setting unit (B114, B116) stops the brake fluid pressure control, when the deceleration determination unit (B115) determines after execution of the brake fluid pressure control that the vehicle (V1) is decelerating.

4. The vehicle braking apparatus (101) according to any one of claim 1 to claim 3, wherein the brake-fluid-pressure setting unit (B114, B116) performs the brake fluid pressure control when the vehicle (V1) starts moving from a stopped state with the vehicle being in the wheel lock state.

5. The vehicle braking apparatus (101) according to any one of claim 1 to claim 4, wherein, when every wheel of the vehicle is locked, the wheel-lock detection unit (B112) detects that the vehicle is in the wheel lock state.

6. A vehicle braking apparatus (101) comprising:
a slope detection unit (Bill) configured to detect that a vehicle (V1) is on a slope road;
a wheel-lock detection unit (B112) configured to detect that the vehicle (V1) is in a wheel lock state;
a vehicle-state determination unit (B113) configured to determine whether a movement direction of the vehicle (V1) on the slope road matches a steering direction or not; and
a brake-fluid-pressure setting unit (B114, B116) configured to set brake fluid pressure of the vehicle (V1),
wherein, in a period during which the vehicle (V1) is moving on the slope road after starting to move on the slope road in the wheel lock state, when the movement direction of the vehicle (V1, V22) does not match the steering direction, the brake-fluid-pressure setting unit (B114, B116) sets the brake fluid pressure lower than a brake fluid pressure that is set in a case where the movement direction of the vehicle (V1, V21) matches the steering direction.

7. A vehicle braking method comprising steps of:
detecting that a vehicle (V1) is on a slope road (S102); and
detecting that the vehicle starts moving in a brake-on state (S104, S106) after stopping on the slope road (S103), the brake-on state is a state in which a brake is applied,
wherein, after starting to move in the brake-on state, the vehicle braking method further comprises steps of:
determining whether the vehicle is in a wheel lock state or not (S107: S201);
determining whether the movement direction of the vehicle (V1) matches the steering direction or not (S107: S204), when the vehicle is in the wheel lock state; and
reducing brake fluid pressure to be lower than in a case where the movement direction matches the steering direction(S107: S205, S206), when the movement direction does not match the steering direction.
